Europäisches Patentamt

European Patent Office

Office européen des brevets

(11) Publication number: **0 194 286**

**B1**

(12) **EUROPEAN PATENT SPECIFICATION**

(45) Date of publication of patent specification: **22.11.90**

(21) Application number: **85904499.2**

(22) Date of filing: **02.09.85**

(86) International application number:
**PCT/SE85/00325**

(87) International publication number:
**WO 86/01687 27.03.86 Gazette 86/07**

(51) Int. Cl.⁵: **A 23 C 3/00, A 01 J 11/00**

(54) **METHOD AND PLANT FOR PRODUCING MILK WITH A LOW BACTERIAL CONTENT.**

(30) Priority: **11.09.84 SE 8404545**

(43) Date of publication of application:
**17.09.86 Bulletin 86/38**

(45) Publication of the grant of the patent:
**22.11.90 Bulletin 90/47**

(84) Designated Contracting States:
**CH DE FR GB IT LI NL SE**

(56) References cited:
**EP-A-0 052 862**
**DE-A- 739 170**
**SE-A-6 715 081**
**US-A-4 140 806**

**Ultrafiltration Handbook, Dairy Handbook,**
**North European Food and Dairy Journal No. 1**
**1988**

**The file contains technical information**
**submitted after the application was filed and**
**not included in this specification**

(73) Proprietor: **ALFA-LAVAL FOOD & DAIRY**
**ENGINEERING AB**
**Bryggaregatan 23 P.O. Box 1008**
**S-221 03 Lund (SE)**

(72) Inventor: **HOLM, Sune**
**Malsmansvägen 6**
**S-223 67 Lund (SE)**
Inventor: **MALMBERG, Rolf**
**Sparsnögatan 44**
**S-222 52 Lund (SE)**
Inventor: **SVENSSON, Kjell**
**Ekvägen 8**
**S-240 17 S. Sandby (SE)**

(74) Representative: **Lerwill, John et al**
**A.A. Thornton & Co. Northumberland House**
**303-306 High Holborn**
**London, WC1V 7LE (GB)**

## Description

The present invention relates to the production of milk with a low bacterial content, wherein whole milk is divided by centrifugal separation into cream and skim milk fractions for further treatment. The cream fraction may be handled in different ways depending on the desired end product.

It is known to produce milk with low bacterial content by removing the bacteria. In SE-A-208 841 there is described a method of treating bacteria containing milk by bactofuge treatment of the milk. The liquid enriched in bacteria is sterilized by heating and is remixed with the centrifuged milk. By this treatment about 90% of the bacteria may be removed.

From SE-A-380 422 it is known to divide whole milk into two fractions by microfiltration, during which the milk flows along the surface of the filter. The permeate which passes through the pores of the filter (size = 0.1-10 μm) consists of skim milk, while the concentrate consists of cream. Since the fat globules and the bacteria in the milk are about the same size, the skim milk obtained is practically free from bacteria. This method of treating the milk is certainly effective, but the filtration step is expensive and power demanding.

In certain instances, it is of special importance to obtain a milk with a low bacterial content.

The raw milk may be so contaminated that merely pasteurizing does not give adequate keeping qualities. For some applications it may be of value to be able to offer milk where the bacterial content has been reduced to about one hundredth of the original value. It is especially important to be able to start with a milk with a low bacterial content when producing cheese, since incorrect bacteria cultures may destroy the produced cheeses. It is not acceptable to heat-treat the milk to the required extent; since the heat treatment may give a lower yield of cheese and influence the coagulation time.

Today saltpetre is usually added in order to avoid incorrect fermentations. In many respects it would be desirable to avoid this addition.

According to the invention a new method of treating whole milk is suggested according to which a considerable reduction of bacterial content of the treated milk is obtained, without suffering the same level of costs which are associated with the filtration of whole milk. The invention resides in a combination of centrifugal separation and microfiltration.

According to one aspect the present invention provides a method of treating whole milk for obtaining a milk product, with a low bacteria content wherein the whole milk is divided by centrifugal separation into cream and skim milk fractions prior to further treatment and characterised in that said further treatment comprises microfiltration of the skim milk fraction for separating fat globules and bacteria to produce permeate consisting of skim milk with a low bacterial content, and concentrate with a higher fat content that the permeate, during the microfiltration the skim milk being circulated around a path comprising a microfilter arranged for the skim milk to flow parallel to the surface of the filter membrane (cross-flow filtration), sterilization of concentrate and remixing in desired relative quantities permeate with sterilized concentrate and/or cream fraction.

This method of producing milk with a low bacterial content may have as the end milk product whole milk, standardized milk, or skim milk. If the permeate consisting of treated skim milk is mixed with sterilized concentrate, or a part thereof, the end product consists of skim milk. If all or part of the cream fraction is mixed with the skim milk, whole milk or standardized milk is obtained. It is also possible for a small part of the cream to be remixed with the skim milk prior to microfiltration, but the capacity of the microfilter diminishes rapidly with an increasing fat content in the milk.

In the milk treating steps carried out after the microfiltration, homogenization and heat treatment adapted to the use of the milk are included.

The skim milk flows parallel to the surface of the membrane during the microfiltration (cross flow filtration), and to obtain a sufficient flow through the membrane of the microfilter the skim milk should pass the surface of the membrane with a high speed. A suitable size for the pores of the membrane in the microfilter is 0.1-1.2 μm.

The preferred temperature during the filtration is 50-60°C and depending on the temperature of the skim milk after the centrifugal separation it can be heated or cooled to the required temperature for the microfiltration prior to supplying skim milk to the circulation path.

There will be some heating of the skim milk due to the work of the circulation pump and the preheating/precooling can be adjusted to take this into account.

Studies of filter clogging have shown that an advantageous method of carrying through the filtration is to start with circulation of milk at a temperature of about 50°C at the beginning of each working period, and then let the temperature slowly rise to 60°C. The filters must be cleaned after some hours operation, normally 5 - 8 h. The highest capacity, but also the fastest clogging, is obtained when microfiltration takes place at about 60°C.

In accordance with a second aspect the present invention provides a plant for treating whole milk for obtaining a milk product with a low bacterial content, comprising a heat exchanger (2) for heating whole milk to a suitable separation temperature, a centrifugal separator (3) for dividing of the whole milk into cream and skim milk fractions, characterised in that a microfilter (11) is connected in a pipeline for conducting skim milk, the microfilter has an outlet for permeate consisting of skim milk with a low bacterial content, and an outlet for concentrate with a higher fat content than the permeate and comprising bacteria separated off in the microfilter, and a sterilization unit (15) is connected to a conveying concentrate.

The microfilter is with advantage arranged in a circulation path including a pump for ensuring sufficient flow of skim milk along the membrane surfaces in the microfilter.

Advantageously the plant can comprise a recirculation path connected to the permeate outlet of the microfilter and comprising a pump for returning permeate from the microfilter to the inlet of the circulation path. By recirculating smaller or larger amounts of permeate to pass through the microfilter again, it is possible to compensate for variation in flow resistance which arise between start-up and a steady state for the flow through the microfilter.

The capacity of a pasteurizing plant is constant, while the capacity of a microfilter is very large at the start of a working period, but falls rapidly thereafter. When the capacity of the microfilter falls below that of the pasteurization plant, operation of the plant must be stopped. The recirculation of permeate as described above provides a solution to the problem of using an apparatus with a variable capacity in a plant intended for continuous treatment of a given amount of skim milk according to the capacity of the centrifugal separator.

The plant is with advantage provided with a heat exchanger connected between the centrifugal separator and the circulation path in order to ensure a suitable temperature of the skim milk entering the circulation path for microfiltration.

The microfilter and the sterilizing unit plant can advantageously be provided with respective separate circuits with temperature and cleaning programmes adapted thereto. Both units have special cleaning problems. In the microfilter it may be hard to clean the surface of the membrane from the coating of milk proteins which is spontaneously formed when the milk passes a membrane. In the sterilization unit the high temperatures may lead to encrustations.

The plant of the invention may also comprise means enabling the microfilter and the sterilization unit to be made non-operative and the plant to be operated as an ordinary pasteurization plant. With such an arrangement is easily possible to adapt the plant to occasional changes in production desirable, for example due to a malfunction in the microfilter or the sterilization unit or in some of the pasteurization plants within the dairy.

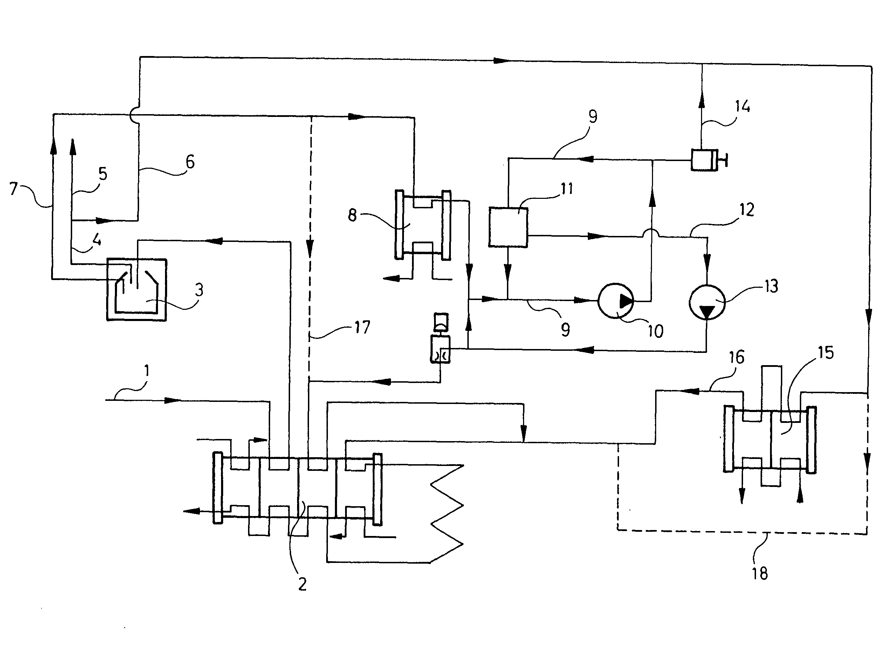

The invention will now be described in more detail with reference to the accompanying drawing which is a schematic representation of a plant for production of standardized milk with low bacterial content.

Whole milk 1 from cooled storage tanks in the dairy is heated to a suitable separation temperature in a plate heat exchanger 2 and is thereafter led to a centrifugal separator 3, where it is divided into two fractions. One fraction 4 consists of cream, which is divided into two part streams 5 and 6. The part stream 5 is led away and constitutes one end product. The second fraction obtained from the centrifugal separator is skim milk 7 and is conducted to a heat exchanger 8 in order to be cooled/heated to a suitable temperature. After this temperature adjustment, the skim milk is fed to a circulation path 9 comprising a pump 10 and a microfilter 11. The microfilter consists of a number of membranes arranged in parallel to each other and over which the skim milk flows parallel to the membrane surface. The membranes consist of material suitable for use with food. It is, of course, also possible to use a microfilter of a different type, e.g. having a filter tube within a shell, or some other kind of arrangement. The permeate outlet of the microfilter is connected to a pipe 12 which includes a second pump 13 and which defines a return flow or recirculation path enabling permeate to be combined with the skim milk fraction after the latter has passed through the heat exchanger 8. The permeate flow conducted from the microfilter the pipe 12 consists of skim milk with a low bacterial content. Permeate is conducted to the heat exchanger 2 to have its temperature adjusted. A flow of concentrate 14 which contains fat globules and bacteria, is taken from the microfiltration circuit and after a combination with the part stream 6 of cream is fed to a sterilization unit 15. The flow of sterilized cream obtained from the unit 15 and the flow of temperature adjusted skim milk from the heat exchanger 2 are combined to provide milk with a predetermined fat content, which milk is directed to the heat exchanger 2 in order to be subjected to a finishing heat treatment step. Depending on the intended use the milk product obtained, the finishing heat treatment can be a pasteurizing treatment or a more mild heat treatment which is appropriate if the milk product is to be used for making cheese. The plant includes a number of valves, which have not been described, for controlling the flow and/or pressure of the liquid in different parts of the plant.

The plant illustrated in the drawing has been designed so that the skim milk fraction can be led directly to the heat exchanger 2 by way of a pipe 17. Also, the cream fraction 6 may by-pass the sterilization unit 15 through the pipe 18. As a result the plant can be used as a conventional pasteurization plant, which may be of advantage both if some malfunction arises in the microfilter or in the sterilization unit, and if there is unexpectedly large demand for milk which only needs pasteurising. If homogenization of the milk is desired, this is suitably carried out immediately prior to pasteurising. The plant is also provided with separate cleaning circuits for the microfilter and the sterilizing unit, which are not shown in the drawing. In a suitable method of cleaning the microfilter the membrane surfaces are first rinsed, then a strongly alkaline detergent is flushed over the membrane surfaces and may work with dissolving effect for some hours, and before it is rinsed away with water. By this method good and effective cleaning of the membrane surfaces is obtained, including removal of substances which are difficult to dissolve, and also a chemical influence is imparted to the membrane which improves the following filtration. This cleaning regime also has a good bacteriostatic effect.

The example given below shows how the method according to the invention may be used for producing standarized milk with a low bacterial content.

Example

10.000 l/h whole milk with 4% fat content is heated to a separation temperature of 52°C and led to a centrifugal separator from which is taken 1.000 l/h cream with a fat content of 40%. Of the 1.000 l/h, a flow of 250 l/h is taken away and constitutes an end product, while the remaining flow of 750 l/h is used for remixing. From the centrifugal separator there is also obtained 9.000 l/h skim milk with a fat content of 0.06%. In the recirculation path a flow is maintained with the help of the pump 13, which may vary from 8.000 l/h to 16.000 l/h. From the recirculation path there is taken a flow of 8.100 l/h of permeate with a fat content of 0.04%, while from the circulation path a flow of 900 l/h of concentrate with a fat content of 0.25% continuously taken away. The concentrate is mixed with the part stream 750 l/h of cream and gives 1.650 l/h cream mixture with a fat content of 18%, which is sterilized. After the sterilization the cream mixture is mixed with the purified skim milk and the end product constitutes 9.750 l/h standardized milk with a fat content of 3%.

**Claims**

1. A method of treating whole milk for obtaining a milk product with a low bacteria content, wherein the whole milk is divided by centrifugal separation into cream and skim milk fractions prior to further treatment and characterised in that said further treatment comprises microfiltration of the skim milk fraction for separating fat globules and bacteria to produce permeate consisting of skim milk with a low bacterial content, and concentrate with a higher fat content than the permeate, during the microfiltration the skim milk being circulated around a path comprising a microfilter arranged for the skim milk to flow parallel to the surface of the filter membrane (cross-flow filtration), sterilization of concentrate and remixing in desired relative quantities permeate with sterilized concentrate and/or cream fraction.

2. A method according to claim 1, wherein the permeate is remixed with all or a part of the concentrate.

3. A method according to claim 1 or 2, wherein the concentrate is mixed with a part of the cream fraction prior to the sterilization.

4. A method according to claim 1, 2 or 3, wherein the membrane has a pore size of 0.2 - 1.0 μm.

5. A method according to any of claims 1 to 4, wherein prior to microfiltration the skim milk is passed through a heat exchanger to adjust the temperature thereof to a level suitable for entering the circulation path.

6. A method according to claim 5, wherein the microfiltration is carried out at a temperature within the range of 50 - 60°C.

7. A method according to claim 6, wherein at the start of an operation period the temperature of the circulating skim milk is near 50°C, and the temperature is allowed to rise towards 60°C as the operation proceeds.

8. A plant for treating whole milk for obtaining a milk product with a low bacterial content, comprising a heat exchanger (2) for heating whole milk to a suitable separation temperature, a centrifugal separator (3) for dividing of the whole milk into cream and skim milk fractions, characterised in that a microfilter (11) is connected in a pipeline for conducting skim milk, the microfilter has an outlet for permeate consisting of skim milk with a low bacterial content, and an outlet for concentrate with a higher fat content than the permeate and comprising bacteria separated off in the microfilter, and a sterilization unit (15) is connected to a pipe conveying concentrate.

9. A plant according to claim 8, wherein the microfilter (11) is arranged in a circulation path comprising a pump (10) for ensuring sufficient flow of the skim milk along the membrane surfaces in the microfilter (11).

10. A plant according to claim 8 or 9, wherein a recirculation path is connected to the permeate outlet of the microfilter and comprises a pump (13) for returning permeate from the microfilter to the inlet of the circulation path.

11. A plant according to claim 8, 9 or 10, wherein a heat exchanger (8) is connected between the centrifugal separator (3) and the circulation path to ensure a suitable temperature of the skim milk entering said path.

12. A plant according to any of claims 8 to 11, wherein the microfilter (11) and the sterilizing unit (15) are both provided with separate cleaning paths with temperature and cleaning programmes adapted to the respective unit.

13. A plant according to any of claims 8 to 13, wherein means are provided to enable the microfilter (11) and the sterilizing unit (15) to be made non-operative and the plant to be run as a conventional pasteurizing plant.

**Patentansprüche**

1. Verfahren zum Behandeln von Vollmilch zur Herstellung eines Milchproduktes mit einem niedrigen Bakteriengehalt, wobei die Vollmilch vor der weiteren Behandlung durch Zentrifugalseparation in Sahne- und Magermilch-Fraktionen aufgeteilt wird, dadurch gekennzeichnet, daß die weitere Behandlung eine Mikrofiltration der Magermilch-Fraktion zum Abtrennen der Fettkügelchen und der Bakterien umfaßt zum Produzieren eines Permeats, welches aus Magermilch mit einem niedrigen bakteriellen Gehalt besteht, und eines Konzentrats mit höherem Fettgehalt als das Permeat, wobei während der Mikrofiltration die Magermilch auf einem Pfad zirkuliert wird, der ein Mikrofilter aufweist, welches angeordnet ist, damit die Magermilch parallel zur Oberfläche der Filtermembran (Quer-Strömungs-Filtration) strömt, und weiterhin eine Sterilisation des Konzentrats und ein Rückmischen des Permeats in gewünschten relativen Mengen mit dem sterilisierten Konzentrat und/oder der Sahne-Fraktion.

2. Verfahren nach Anspruch 1, bei dem das Permeat mit dem gesamten oder einem Teil des Konzentrats rückgemischt wird.

3. Verfahren nach Anspruch 1 oder 2, bei dem das Konzentrat mit einem Teil der Sahne-Fraktion vor der Sterilisation gemischt wird.

4. Verfahren nach Anspruch 1, 2 oder 3, bei dem die Membran eine Porengröße von 0,2 bis 1,0 μm hat.

5. Verfahren nach einem der Ansprüche 1 bis 4, bei dem vor der Mikrofiltration die Magermilch durch einen Wärmetauscher geschickt wird, um die Temperatur derselben auf ein Niveau einzustellen, welches für den Eintritt in den Zirkulationspfad geeignet ist.

6. Verfahren nach Anspruch 5, bei dem die Mikrofiltration durchgeführt wird bei einer Temperatur innerhalb des Bereiches von 50 bis 60°C.

7. Verfahren nach Anspruch 6, bei dem beim Beginn einer Betriebsperiode die Temperatur der zirkulierenden Magermilch nahe 50°C liegt und der Temperatur erlaubt wird, in Richtung auf 60°C anzusteigen, während der Betrieb fortschreitet.

8. Anlage zur Behandlung von Vollmilch zur Herstellung eines Milchproduktes mit einem niedrigen bakteriellen Gehalt, mit einem Wärmetauscher (2) zum Erwärmen der Vollmilch auf eine geeignete Separationstemperatur, mit einem Zentrifugalseparator (3) zum Aufteilen der Vollmilch in Sahne- und Magermilchfraktionen, dadurch gekennzeichnet, daß ein Mikrofilter (11) eingeschaltet ist in eine Rohrleitung zum Führen von Magermilch, wobei das Mikrofilter einen Auslaß für Permeat, welches aus Magermilch mit einem niedrigen bakteriellen Gehalt besteht, und einen Auslaß für Konzentrat hat, das einen höheren Fettgehalt als das Permeat hat und Bakterien aufweist, die in dem Mikrofilter abgetrennt wurden, und daß eine Sterilisationseinheit (15) mit einem Rohr verbunden ist, welches Konzentrat ableitet.

9. Anlage nach Anspruch 8, bei der das Mikrofilter (11) in einem Zirkulationspfad angeordnet ist, der eine Pumpe (10) aufweist zur Sicherstellung einer ausreichenden Strömung der Magermilch über die Membranflächen in dem Mikrofilter (11).

10. Anlage nach Anspruch 8 oder 9, bei der ein Rezirkulationspfad verbunden ist mit dem Permeatauslaß des Mikrofilters und eine Pumpe (13) aufweist zum Rückführen von Permeat von dem Mikrofilter zu dem Einlaß des Zirkulationspfades.

11. Anlage nach Anspruch 8, 9 oder 10, bei der ein Wärmetauscher (8) eingeschaltet ist zwischen dem Zentrifugalseparator (3) und dem Zirkulationspfad, um eine geeignete Temperatur der in den Pfad eintretenden Magermilch sicherzustellen.

12. Anlage nach einem der Ansprüche 8 bis 11, bei der das Mikrofilter (11) und die Sterilisationseinheit (15) beide mit separaten Reinigungspfaden versehen sind mit an die jeweilige Einheit eingepaßten Temperatur- und Reinigungsprogrammen.

13. Anlage nach einem der Ansprüche 8 bis 12, bei der Mittel vorgesehen sind, um das Mikrofilter (11) und die Sterilisationseinheit in die Lage zu versetzen, abgeschaltet zu werden und die Anlage als eine konventionelle Pasteurisierungsanlage zu betreiben.

**Revendications**

1. Procédé pour traiter du lait entier et obtenir un produit laitier à faible teneur en bactéries, dans lequel le lait entier est divisé par séparation centrifuge en fractions de crème et de lait écrémé avant un traitement ultérieur, caractérisé en ce que ledit traitement ultérieur comprend la microfiltration de la fraction de lait écrémé pour séparer les globules gras et les bactéries et produire un perméat consistant en lait écrémé à faible teneur en bactéries, et un concentré à teneur en matières grasses plus élevé que le perméat, le lait écrémé étant mis en circulation pendant la microfiltration dans un parcours comprenant un microfiltre agencé de façon que le lait écrémé s'écoule parallèlement à la surface de la membrane du filtre (filtration à courant transversal), la stérilisation du concentré et le remélange selon des quantités relatives désirées de perméat avec le concentré stérilisé et/ou la fraction de crème.

2. Procédé selon la revendication 1, dans lequel le perméat est remélangé avec la totalité ou une partie du concentré.

3. Procédé selon la revendication 1 ou 2, dans lequel le concentré est mélangé avec une partie de la fraction de crème avant la stérilisation.

4. Procédé selon la revendication 1, 2 ou 3, dans lequel la membrane présente une dimension de pores de 0,1 à 1,0 μm.

5. Procédé selon l'une quelconque des revendications 1 à 4, dans lequel, avant la microfiltration, le lait écrémé est passé par un échangeur de chaleur pour régler sa température au niveau apte à sa pénétration dans le parcours de circulation.

6. Procédé selon la revendication 5, dans lequel la microfiltration est réalisée à une température comprise entre 50 et 60°C.

7. Procédé selon la revendication 6, dans lequel, au début d'une période de fonctionnement, la température du lait écrémé en circulation est proche de 50°C, et la température est autorisée à monter jusqu'à 60°C à mesure que se déroule l'opération.

8. Installation pour traiter du lait entier et obtenir un produit laitier à faible teneur en bactéries, comprenant un échangeur de chaleur (2) pour chauffer le lait entier à une température de séparation appropriée, un séparateur centrifuge (3) pour diviser le lait entier en fractions de crème et de lait écrémé, caractérisé en ce qu'un microfiltre (11) est relié à une tuyauterie pour acheminer le lait écrémé, le microfiltre comprend une sortie pour le perméat consistant en lait écrémé à faible teneur en bactéries et une sortie pour le concentré à teneur plus élevée en matières grasses que le perméat et comprenant les bactéries séparées dans le microfiltre, une unité de stérilisation (15) est reliée à un tuyau acheminant le concentré.

9. Installation selon la revendication 8, dans laquelle le microfiltre (11) est placé sur le parcours de circulation comprenant une pompe (10) pour assurer un écoulement suffisant du lait écrémé le long des surfaces de la membrane dans le microfiltre (11).

10. Installation selon la revendication 8 ou 9, dans laquelle un parcours de recirculation est relié à la sortie à perméat du microfiltre et comprenant une pompe (13) pour renvoyer le perméat provenant du microfiltre à l'entrée du parcours de circulation.

11. Installation selon la revendication 8, 9 ou 10, dans laquelle échangeur de chaleur est relié entre le séparateur centrifuge (3) et le parcours de circulation pour assurer une température appropriée du lait écrémé qui pénètre dans ledit parcours.

12. Installation selon l'une quelconque des revendications 8 à 11, dans laquelle le microfiltre (11) et une unité de stérilisation (15) sont tous les deux munis de parcours de nettoyage séparés avec des programmes de température et de nettoyage adaptés à l'unité respective.

13. Installation selon l'une quelconque des revendication 8 à 12, dans laquelle sont prévus des moyens pour permettre de rendre inopérants le microfiltre (11) et l'unité de stérilisation (15) et d'utiliser l'installation comme une installation de pasteurisation classique.

1